# EUROPEAN PATENT SPECIFICATION

(11) **EP 3 988 203 B1**
(45) Date of publication and mention of the grant of the patent: **23.10.2024**
(21) Application number: 20827260.9
(22) Date of filing: 16.06.2020
(51) Int. Cl.: B01J 20/20, A01K 63/04, C02F 1/28, C02F 1/52, C02F 1/66, B01J 20/28, B01J 20/30, B01J 20/04, C02F 101/16, C02F 103/20, C02F 101/10

(54) **WATER PURIFICATION MATERIAL**
WASSERREINIGUNGSMITTEL
MATÉRIAU DE PURIFICATION D'EAU

(30) Priority: 20.06.2019 JP 2019114389
(43) Date of publication of application: 27.04.2022
(73) Proprietor: Sugita Wire, Ltd., Tokyo 131-0042 (JP)
(72) Inventor: MIKAMI Yasuie, Tokyo 131-0042 (JP); KODAMA Shigemi, Tokyo 131-0042 (JP); KIMURA Shigeo, Tokyo 131-0042 (JP)
(74) Representative: Meissner Bolte Partnerschaft mbB
(86) International application number: PCT/JP2020/023587
(87) International publication number: WO 2020/255957

(56) References cited:
- WO-A1-2008/001442
- WO-A1-2014/003120
- CN-A- 104 556 477
- CN-A- 107 162 093
- CN-A- 108 911 412
- CN-A- 109 111 024
- JP-A- 2005 144 420
- JP-A- 2006 110 470
- JP-A- 2008 238 131
- JP-A- 2012 091 076
- JP-A- 2013 501 146
- JP-A- H0 940 514
- US-A1- 2010 243 571

## Description

### Technical Field

The present invention relates to purification of water in water tanks and the like used for rearing, appreciating, or cultivating aquatic organisms and has an object to remove phosphorus (P), ammonia (NH₃), nitrous acid (NO₂), nitric acid (NO₃), and the like generated by excrement of the organisms, food residues, or the like and to reduce "algae" and light brown adhering matters on glass surfaces of water tanks.

### Background Art

To keep the water quality, a method of paving the bottom of a rearing tank for aquatic organisms with cobblestones and planting water plants is employed. This method has the problem that pollution grows worse because water is not purified, although the appearance is clean. Contaminants in the rearing water are therefore commonly removed with a filter or a purification material in which the filter is combined with an adsorbent such as activated carbon while the rearing water is circulated.

However, since conventional adsorbents cannot completely remove phosphorus, ammonia, nitrous acid, nitric acid, and the like, blooms of blue-green algae and the like are unavoidable. Wall surfaces of rearing tanks are therefore required to be periodically cleaned.

Addition of a very small amount of a germicide into water is effective as means for preventing blooms of algae such as blue-green algae but is not suitable for rearing water for cultivation of edible fish.

As a method for removing contaminant components in water, Patent Literature 1 discloses a method for decomposing organic matters in water with an enzyme contained in a porous inorganic member. This method utilizes a protease that has a function of decomposing protein, a lipolytic enzyme that has a function of decomposing lipid, and an amylolytic enzyme that has a function of decomposing starch. However, water containing such organic matters is not used in common water tanks, and this expensive method is hardly used.

Further, Patent Literature 2 discloses adsorption and removal of ammonia and organic matters using an inorganic purification material made from zeolite, magnesium aluminosilicate, natural zeolite, activated carbon, or the like. This method is used for purifying environmental water for live aquatic animals, which differs from the object of the present invention. That is, the case of live fish and the present invention share the same object of purifying water, but the primary object in the case of live fish is transportation, and nitric acid and nitrous acid are not much formed because a period during which water purification is required is one to three days without "feeding". Accordingly, this literature discloses nothing about the adsorption-removal capacity of phosphorus, nitrous acid, nitric acid, and the like.

Proposed examples of a purifying agent that adsorbs and removes phosphorus components in water include a material having a large specific surface area obtained by neutralizing iron oxyhydroxide (Patent Literature 3), a material obtained by neutralizing a liquid mixture of ferrous sulfate and ferric sulfate such that the material has a composition of Fe(OH)m(SO₄)n·1H₂O (where 2 ≤ m < 3, 0 < n ≤ 0.5, and 0 ≤ 1 < 0.5) (Patent Literature 4), a material obtained by impregnating a porous ceramic granule obtained by mixing and sintering titanium oxide, zirconia, zeolite, ferric oxide, and manganese oxide, with microorganisms (Patent Literature 5), an amorphous anion adsorbent containing ferric hydroxide obtained by adding to an aqueous solution of ferrous iron an oxidizing material in an amount less than the equivalent amount of the ferrous iron and then adding an alkali such that the pH is adjusted to 1.5-5.5 (Patent Literature 6), and a material obtained by forming and allowing a photocatalyst film to be supported on a surface of at least one porous carrier selected from activated carbon, zeolite, silica gel, pearlite, porous glass, and the like by evaporation or vacuum deposition or by impregnating the porous carrier with a solution or dispersion of an organometallic compound serving as a photocatalyst and performing decomposition by heating (Patent Literature 7) .

These purifying agents show improved removal ratios of phosphorus compared with conventional adsorbents, but algae such as blue-green algae grow with a very small amount of nutrients, so that blooms of algae cannot be completely prevented. Further, relevant documents are CN 109 111 024 A, CN 107 162 093 A, US 2010/243571 A1 and CN 108 911 412 A.

As described above, development of a purifying agent that is safe for bred fish and can prevent blooms of algae for a longer period has been desired.

### Citation List

### Patent Literature

Patent Literature 1
   Japanese Patent Laid-Open No. 2014-113561
Patent Literature 2
   Japanese Patent Publication No. 54-20440
Patent Literature 3
   Japanese Patent Laid-Open No. 2006-124239
Patent Literature 4
   Japanese Patent Laid-Open No. 2007-001835
Patent Literature 5
   Japanese Patent Laid-Open No. 2005-144304
Patent Literature 6
   Japanese Patent No. 3961558
Patent Literature 7
   Japanese Patent Laid-Open No. 2006-110470

### Summary of Invention

### Technical Problem

An object of the present invention is to manufacture a purification material for a water tank used for rearing or appreciating aquatic organisms. That is, the object is to provide a method for manufacturing a purification material that purifies water by adsorbing and removing phosphorus, ammonia, nitrous acid, nitric acid, and the like excreted by aquatic organisms.

### Solution to Problem

The present inventors have researched wastewater treatment using an iron-based flocculant for many years and carried out examinations of removal of various harmful materials. As a result, it has been found that iron hydroxide adsorbs "phosphorus" and "ammonia", zeolite adsorbs "ammonia", a mixture of zeolite and iron hydroxide adsorbs "nitrous acid" and "nitric acid", titanium oxide oxidizes "nitrous acid" to "nitric acid" by a reaction with light, nitrous acid is more poisonous to aquatic organisms than nitric acid, and magnesium has a function of stabilizing the pH of water as well as functions of preventing formation of green "algae" in a water tank, reducing light-brown adhering matters, and the like. The present invention has thus been completed.

The present invention is based on these findings and is a water purification material having a composition represented by a mixing ratio of zeolite, ferric hydroxide, activated carbon, titanium oxide, and magnesium hydroxide of 6 to 7:1 to 2:0.5 to 1:0.01 to 0.05:0.01 to 0.10 in terms of weight ratio.

The weight ratio of zeolite in the present invention is 6 to 7 because the adsorption of ammonia, nitric acid, nitrous acid, and the like is low at a ratio of 6 or less and because the phosphorus adsorption decreases at a ratio of 7 or more, which does not serve the present object.

The mixing ratio of iron hydroxide is 1 to 2 because the phosphorus adsorption is low at a ratio of 1 or less and because the adsorption of ammonia, nitrous acid, and nitric acid decreases at a ratio of 2 or more, which is not consistent with the object of the present invention.

Activated carbon does not directly contribute to removal of phosphorus, ammonia, nitrous acid, and nitric acid, which is an object of the present invention, but has the effect of preventing "turbidity" at the start of use. The weight ratio is 0.5 to 1 because turbidity that causes problems at the time of use is not eliminated at a ratio of 0.5 or less, which is not preferable because a lot of work is needed due to impossibility of visual observation of the state of aquatic organisms, and because a ratio of 1 is sufficient for the function and the cost-effectiveness therefore decreases at a ratio of more than 1.

Titanium oxide is 0.01 to 0.05 in the present invention because the function as a photocatalyst is poor at 0.01 or less and cannot exert the effects. Pores of zeolite and iron hydroxide are clogged at 0.05 or more, and the adsorption capacity of phosphorus, ammonia, nitrous acid, and nitric acid decreases.

Magnesium hydroxide is 0.01 to 0.10 because the pH cannot be stabilized and changes to acidic or alkaline depending on the organisms at 0.01 or less and because the possibility of being alkaline increases at 0.10 or more, leading to death of the organisms in some cases.

A purifying agent applicable to rearing of saltwater organisms (fish) has not conventionally been put to practical use, and ion-exchange resins have been used. The reason has been said to be that most adsorbing materials adsorb what are called minerals such as magnesium, sodium, and potassium and change the composition of seawater. The present invention prevents this problem because the present invention contains magnesium as described above and can be used for a long period.

As described above, the present invention adsorbs phosphorus, ammonia, nitrous acid, nitric acid, and the like and therefore prevents adhesion of green flocculates and light-brown adhering matters on glass or the like of a water tank for a period twice or more as long as a conventional period. The frequency of cleaning of the water tank therefore proportionally decreases.

### Advantageous Effects of Invention

The present invention adsorbs and removes phosphorus, ammonia, nitrous acid, nitric acid, and the like and keeps the water quality constant by the function of magnesium, thereby reducing the frequency of exchange of water and adhesion of green algae and light-brown adhering matters. Transparency of the glass is therefore maintained, and a clean condition is maintained. In addition, organisms reared live for a long time.

### Brief Description of Drawings

[Figure 1] Figure 1 is a graph showing the result of a comparative test of the phosphorus adsorption capacity between the article of the present invention and the conventional article in Example.
[Figure 2] Figure 2 is a graph showing the result of a comparative test of the ammonia adsorption capacity between the article of the present invention and the conventional article in Example.

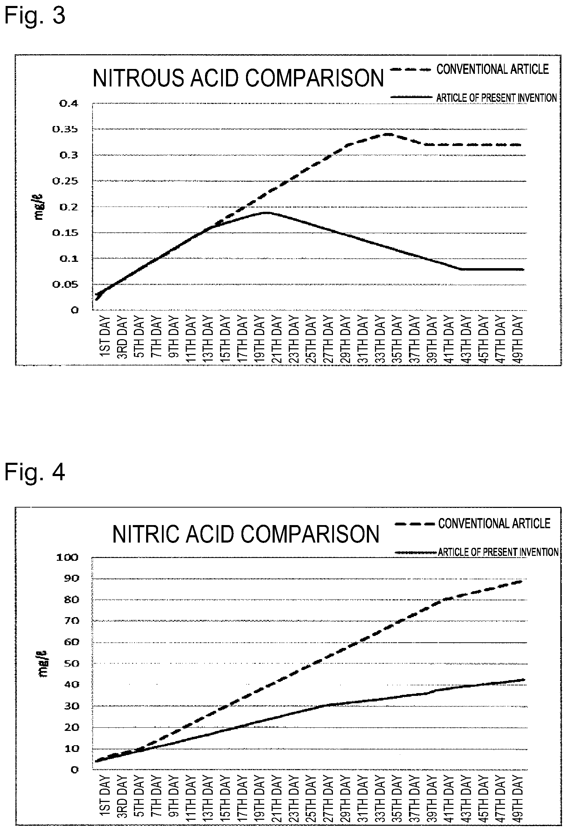

[Figure 3] Figure 3 is a graph showing the result of a comparative test of the nitrous acid (NO₂) adsorption capacity between the article of the present invention and the conventional article in Example.
[Figure 4] Figure 4 is a graph showing the result of a comparative test of the nitric acid (NO₃) adsorption capacity between the article of the present invention and the conventional article in Example.

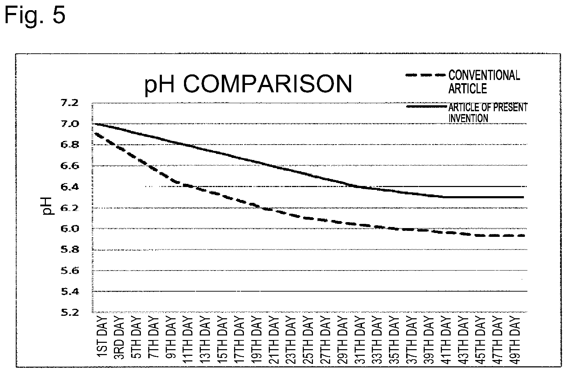

[Figure 5] Figure 5 is a graph showing the result of a comparative test of the pH between the article of the present invention and the conventional article in the Example.

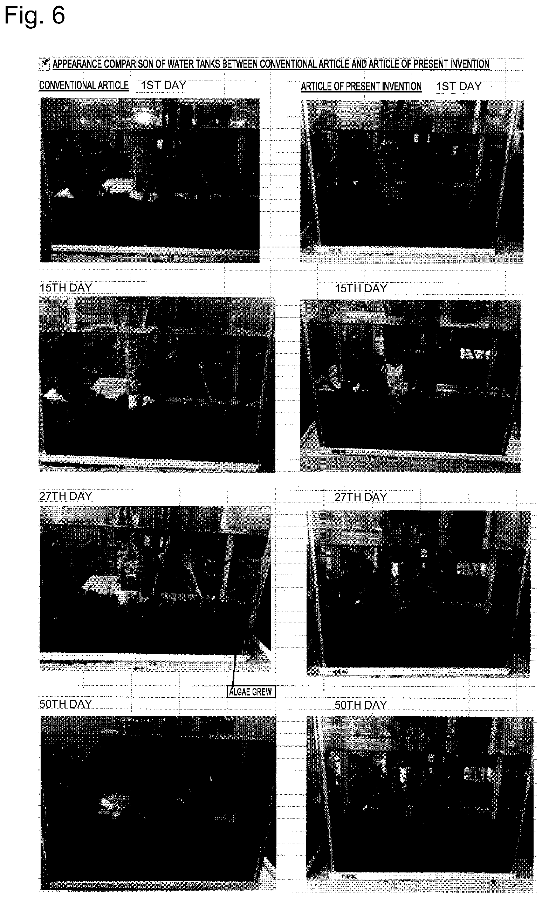

[Figure 6] Figure 6 shows photographs of the states of adhesion of blue-green algae to glass surfaces of fish rearing tanks.

### Description of Embodiments

### Example 1

Granules having diameters of 2 to 3 mm obtained by mixing zeolite, ferric hydroxide, activated carbon, titanium oxide, and magnesium hydroxide crushed to 30 mesh or less at a weight ratio of 6.5:1.5:0.1:0.01:0.08 and granulating the mixture were used as the present invention. PVA was used as a binder for granulation. Granulating means is not limited, and any means may be used for granulation.

As a control purifying agent, iron hydroxide (hereinafter referred to as a "conventional article"), which is the main component of a commercially available purification material, was used.

In each of rectangular water tanks measuring 17 cm wide, 30 cm long, and 24 cm high, 10 L of water, 10 neon tetras, and water plants were put in, and the concentrations of phosphoric acid, ammonia, nitrous acid, and nitric acid in water and the pH in the cases of the article of the present invention and the conventional article were compared. The graphs show the results.

Measurements were performed at a frequency of once a day by collecting an appropriate amount of water in the water tanks with a dropper. Measuring devices used were as follows.
Phosphoric acid: Measuring device: DIGITALPACKTEST DPM2-PO4 (manufactured by KYORITSU CHEMICAL-CHECK Lab., Corp.)
Ammonia: Measuring device: DIGITALPACKTEST DPM2-NH4 (manufactured by KYORITSU CHEMICAL-CHECK Lab., Corp.)
Nitrous acid: Measuring device: DIGITALPACKTEST DPM2-NO2 (manufactured by KYORITSU CHEMICAL-CHECK Lab., Corp.)
Nitric acid: Measuring device: DIGITALPACKTEST DPM2-NO3 (manufactured by KYORITSU CHEMICAL-CHECK Lab., Corp.)
pH: Portable pH meter WM-32P (manufactured by DKK-TOA CORPORATION)

Phosphoric acid and ammonium were not detected in water until the 50th day in the case of the article of the present invention, but the concentrations of phosphoric acid and ammonium were respectively 0.03 to 0.04 mg/L and 0.3 mg/L in the case of the conventional article. This result shows that the article of the present invention was greatly superior to the conventional article and provided greater stability of the water quality.

The nitrous acid content in water in the case of the article of the present invention was also half of the case of the conventional article (after the 20th day). This is caused by the functions of TiO₂, magnesium, and the like, and the difference from the conventional article is clear also in terms of the functions. That is, bacteria have been considered to act on such formation and elimination of nitrous acid, but this result is deemed to show that the causes are the function of the "photocatalyst" and reactions with magnesium. In particular, the decrease after the 20th day defies explanation (by the bacteria theory). The same applies to the comparison result of nitric acid.

The result of pH summarizes the above results. The pH did not greatly change because the present invention produced less nitric acid and all acids than the conventional article and because alkali was able to be added by magnesium and the like.

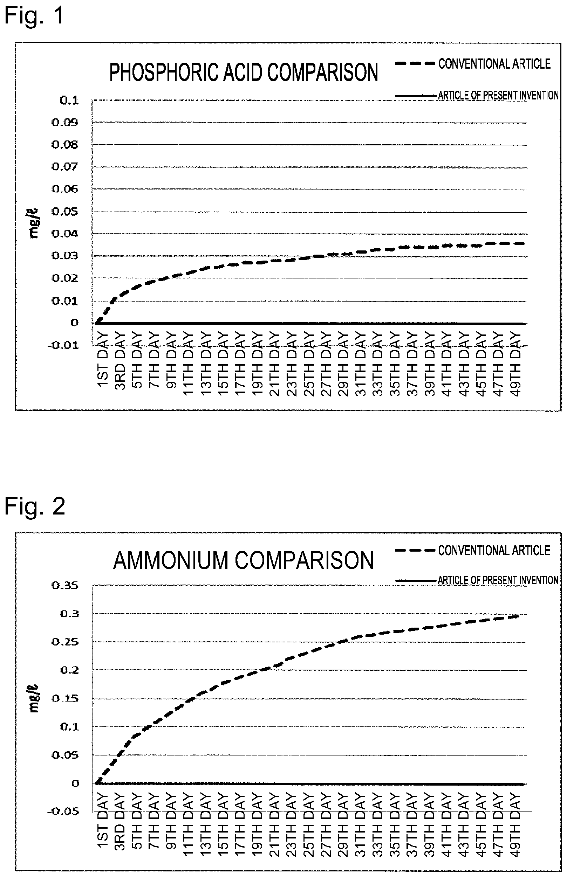

As is clear from the photographs of Figure 2, blue stains on glass of the water tanks were few. Green mossy algae started to grow on the 15 to 30th days in the case of conventional article, but such algae did not grow even after 50 days in the case of the present invention.

As shown by the result shown in Figure 1 above, water was required to be exchanged every 15 to 20 days due to deterioration in the water quality in the case of the conventional article. Figure 2 shows that mossy algae grew in the water tank with the conventional article on the 30th day or so while mossy algae in the water tank with the present invention grew on the 50th day or later. To sum up these results, the required frequency of exchange of water in the water tank with the present invention was half or less of the case of the conventional article.

In addition to the present example, experiments were conducted on goldfish, guppies, and the like and provided substantially the same results.

## Claims

1. A water purification material having a composition represented by a mixing ratio of zeolite, ferric hydroxide, activated carbon, titanium oxide, and magnesium hydroxide of 6 to 7:1 to 2:0.5 to 1:0.01 to 0.05:0.01 to 0.10 in terms of weight ratio.

## Patentansprüche

1. Wasserreinigungsmaterial mit einer Zusammensetzung, die durch ein Mischungsverhältnis von Zeolith, Eisen(III)-hydroxid, Aktivkohle, Titanoxid und Magnesiumhydroxid von 6 bis 7:1 bis 2:0,5 bis 1:0,01 bis 0,05:0,01 bis 0,10 in Bezug auf das Gewichtsverhältnis dargestellt ist.

## Revendications

1. Matériau de purification d'eau ayant une composition représentée par un rapport de mélange de zéolite, d'hydroxyde ferrique, de charbon actif, d'oxyde de titane et d'hydroxyde de magnésium de 6 à 7:1 à 2:0,5 à 1:0,01 à 0,05:0,01 à 0,10 en matière de rapport de poids.
